# EUROPEAN PATENT APPLICATION

(11) **EP 4 756 513 A1**
(43) Date of publication of application: **10.06.2026**
(21) Application number: 25218740.6
(22) Date of filing: 26.11.2025
(51) Int. Cl.: G02B 27/01

(54) **MIXED-REALITY APPARATUSES AND SYSTEMS**

(30) Priority: 03.12.2024 US 202463727597 P; 21.11.2025 US 202519397348
(71) Applicant: Meta Platforms Technologies, LLC, Menlo Park, CA 94025 (US)
(72) Inventor: Tang, Lucas Wen, Menlo Park (US); Bristol, Peter Wesley, Menlo Park (US); Stumme-Diers, Micah, Menlo Park (US); Jones, Alfred, Menlo Park (US); Skelton, Robert Coleman, Menlo Park (US)
(74) Representative: Murgitroyd & Company

(57) **Abstract**

The disclosed mixed-reality display may include an optical system dimensioned to project a mixed-reality image to a user such that an angle of projection determines a region hidden from a peripheral view of the user. The mixed-reality display may also include one or more hardware components electronically coupled to the optical system and dimensioned to fit within the region such that the one or more hardware components are hidden from the user. Additionally, the mixed-reality display may include a frame coupled to hold the optical system and the one or more hardware components, wherein a rim of the frame is dimensioned to fit within the region. Various other apparatuses, systems, and methods of manufacturing are also disclosed.

## Description

### TECHNICAL FIELD

The present disclosure is generally directed to apparatuses, systems, and methods of manufacturing mixed-reality displays.

### BACKGROUND

Artificial and virtual reality (VR) uses computer-generated environments to simulate immersive environments for users through the use of devices such as VR headsets. Some head-worn devices can also include blockers such as blinders that intentionally block out light for users to focus on the digital images. Augmented reality and mixed reality (MR) technology, in particular, can incorporate virtual elements within real-world imaging to create an enhanced environment for users that still enables users to interact with the real world, rather than replacing the real-world environment.

To enable users to experience the real world when wearing MR devices, some traditional solutions utilize a facial interface that creates more distance between the device and a user's face to increase space for peripheral vision. Other traditional devices may use more open form factors, such as glasses, to enable users to see outside of the digital display. For example, MR glasses can enable users to look at the physical environment through and around the glasses while providing an overlay of digital content within the glasses lenses. However, MR glasses often integrate a significant amount of computing components into the frames, creating thick frames that can partially block peripheral vision and break immersion for users. This border can disrupt the transition between imagery generated by the glasses and the peripheral vision of the real-world environment. Thus, better methods of manufacturing and designing MR devices are needed to provide a more seamless visual experience for users.

### SUMMARY

According to a first aspect, there is provided a mixed-reality display comprising: an optical system dimensioned to project a mixed-reality image to a user such that an angle of projection determines a region hidden from a peripheral view of the user; at least one hardware component electronically coupled to the optical system and dimensioned to fit within the region such that the at least one hardware component is hidden from the user; and a frame coupled to hold the optical system and the at least one hardware component, wherein a rim of the frame is dimensioned to fit within the region.

The optical system may project the mixed-reality image to the user by magnifying the mixed-reality image. The angle of projection may increase with the magnification.

The optical system may comprise: a digital passthrough display configured to display the mixed-reality image as a mixture of a real-world image and at least one virtual element; and a projector disposed at a proximal side of the digital passthrough display to project the mixed-reality image to the user using pancake optics.

The at least one hardware component may comprise: a camera that captures the real-world image and transmits the real-world image to an image processing component; and/or the image processing component electronically coupled to the camera and the optical system to convert the real-world image into the mixed-reality image.

The image processing component may convert the real-world image by: adjusting the real-world image to blend with the peripheral view of the user; combining the real-world image with the at least one virtual element; and transmitting the mixed-reality image to the optical system.

The rim of the frame may be angled to minimize a visible bezel of the frame.

According to a second aspect, there is provided a mixed-reality system comprising: the mixed-reality display of the first aspect; and a dimmable window coupled to the frame such that the dimmable window extends beyond the optical system to cover at least a portion of the peripheral view of the user.

The dimmable window may comprise an electrochromic glass that changes a tint of the dimmable window in response to an electrical signal from the frame.

The tint of the dimmable window may comprise at least one of: a clear passthrough tint; a partial tint; a gradient tint; or an opaque tint.

According to a third aspect, there is provided a method of manufacturing a mixed-reality display comprising: dimensioning an optical system to project a mixed-reality image to a user such that an angle of projection determines a region hidden from a peripheral view of the user; electronically coupling at least one hardware component to the optical system and dimensioning the at least one hardware component to fit within the region such that the at least one hardware component is hidden from the user; and coupling a frame to hold the optical system and the at least one hardware component, wherein a rim of the frame is dimensioned to fit within the region.

The optical system may be dimensioned to project the mixed-reality image to the user by magnifying the mixed-reality image. The angle of projection may increase with the magnification.

The optical system may comprise: a digital passthrough display configured to display the mixed-reality image as a mixture of a real-world image and at least one virtual element; and a projector disposed at a proximal side of the digital passthrough display to project the mixed-reality image to the user using pancake optics.

The at least one hardware component may comprise at least one of: a camera that captures the real-world image and transmits the real-world image to an image processing component; and/or the image processing component electronically coupled to the camera and the optical system to convert the real-world image into the mixed-reality image.

The image processing component may be configured to convert the real-world image by: adjusting the real-world image to blend with the peripheral view of the user; combining the real-world image with the at least one virtual element; and transmitting the mixed-reality image to the optical system.

The method may further comprise angling the rim of the frame to minimize a visible bezel of the frame.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1 is a flow diagram of an exemplary method of manufacturing mixed-reality apparatuses and systems.
FIG. 2 is an illustration of example components and optics of a mixed-reality display.
FIG. 3 is a block diagram of an example construction of a mixed-reality image.
FIG. 4 is an illustration of an example mixed-reality system displaying a mixed-reality image.
FIG. 5 is an illustration of an example mixed-reality system with an example region hidden from a peripheral view of a user.
FIG. 6 is an illustration of another example mixed-reality system with an example dimmable window.
FIG. 7 is an illustration of an example artificial-reality system.
FIG. 8 is an illustration of an example artificial-reality system with a handheld device.
FIG. 9A is an illustration of example user interactions within an artificial-reality system.
FIG. 9B is an illustration of example user interactions within an artificial-reality system.
FIG. 10A is an illustration of example user interactions within an artificial-reality system.
FIG. 10B is an illustration of example user interactions within an artificial-reality system.
FIG. 11 is an illustration of an example wrist-wearable device of an artificial-reality system.
FIG. 12 is an illustration of an example wearable artificial-reality system.
FIG. 13 is an illustration of an example augmented-reality system.
FIG. 14A is an illustration of an example virtual-reality system.
FIG. 14B is an illustration of another perspective of the virtual-reality systems shown in FIG. 14A.
FIG. 15 is a block diagram showing system components of example artificial- and virtual-reality systems.

Throughout the drawings, identical reference characters and descriptions indicate similar, but not necessarily identical, elements. While the examples described herein are susceptible to various modifications and alternative forms, specific examples have been shown in the drawings and will be described in detail herein. However, the examples described herein are not intended to be limited to the particular forms disclosed. Rather, the present disclosure covers all modifications, equivalents, and alternatives falling within the scope of the appended claims.

### DETAILED DESCRIPTION

The present disclosure is generally directed to apparatuses, systems, and methods of manufacturing mixed-reality displays that reduce visible borders. As will be explained in greater detail below, embodiments of the present disclosure may, by constructing a mixed-reality device with reduced bezels, improve the seamless transition between virtual optics and the real world. By integrating an optical system that projects the digital image at an angle, the apparatuses, systems, and methods described herein may determine a cone or region in which the digital content is viewable and real-world elements are not (e.g., the field of view of the display). The disclosed apparatuses, systems, and methods may then dispose other computing components, such as cameras, sensors, image processors, or other hardware, within the cone and behind the projected digital image. Additionally, the disclosed apparatuses, systems, methods may reduce the bezel of a frame by shaving the rim of the glasses to align with the angle of the cone. By ensuring the form and components of the device are within the hidden region of the cone, the apparatuses, systems, and methods described herein may improve the transition between the digital image and the real-world environment visible from a user's peripheral vision. The disclosed apparatuses, systems, and methods may also incorporate a dimmable window around the digital projection to provide flexibility for immersive virtual reality or open mixed reality. For example, by utilizing electrochromic glass, a clear window can become tinted at will to toggle between digital immersion or integration with reality. With a relatively small field-of-view display, the disclosed apparatuses, systems, and methods may provide a better immersive experience with a nearly bezel-less device. Using a magnified projection with more angled digital rays from the projected imagery, the apparatuses, systems, and methods described herein may enable larger field of view from a smaller display and, in turn, a larger space to add other components to the device. Thus, the disclosed apparatuses, systems, and methods may improve over traditional designs of mixed-reality apparatuses and systems.

Features from any of the embodiments described herein may be used in combination with one another in accordance with the general principles described herein. These and other embodiments, features, and advantages will be more fully understood upon reading the following detailed description in conjunction with the accompanying drawings and claims.

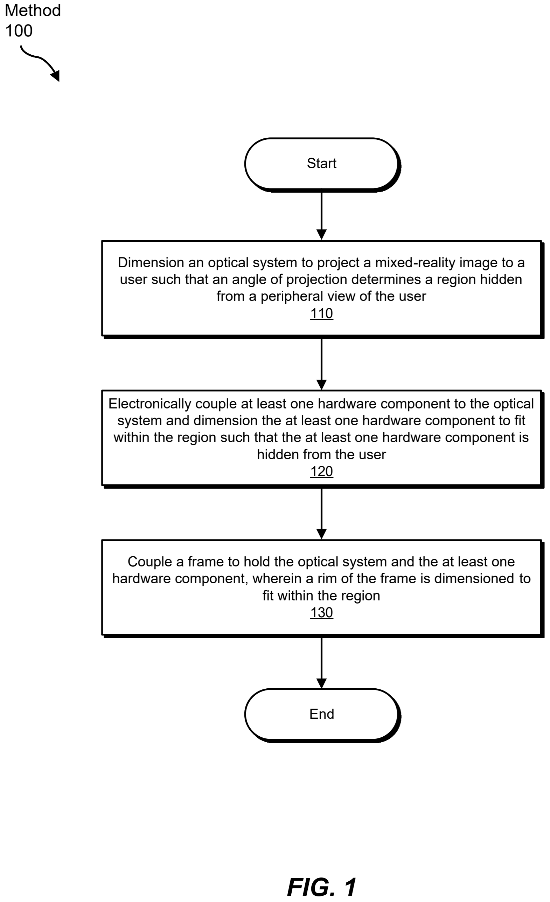

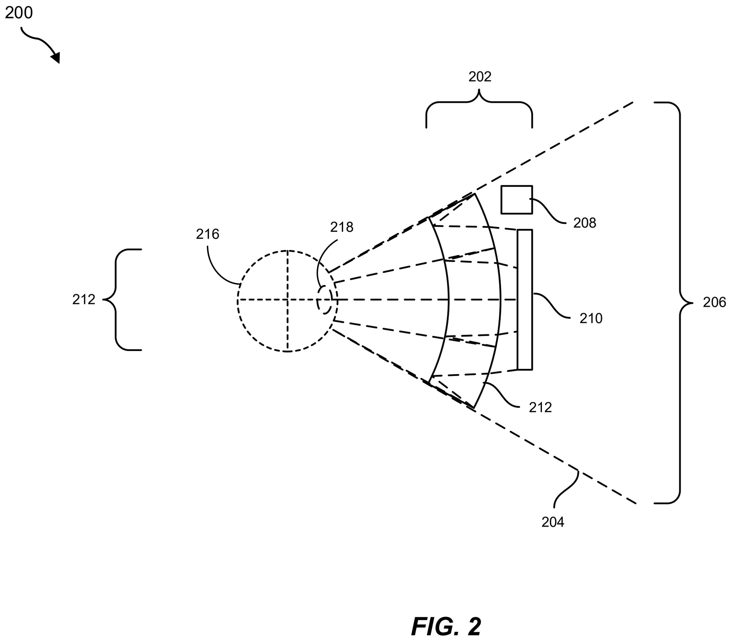

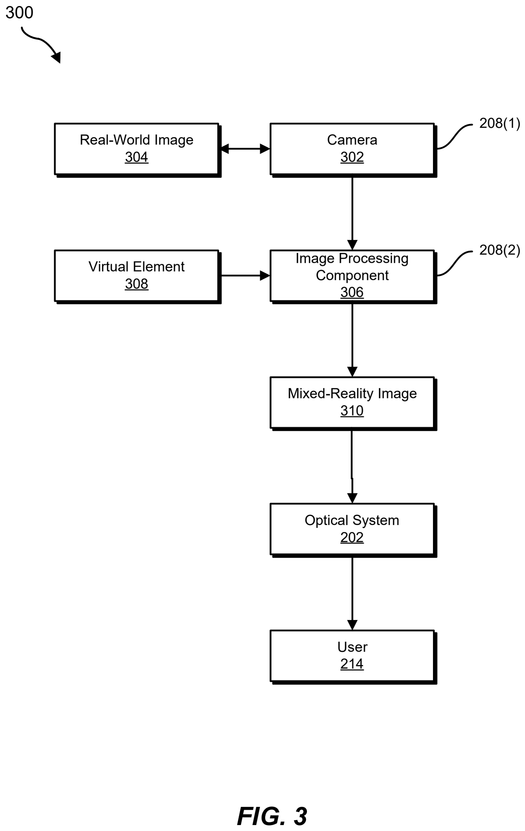

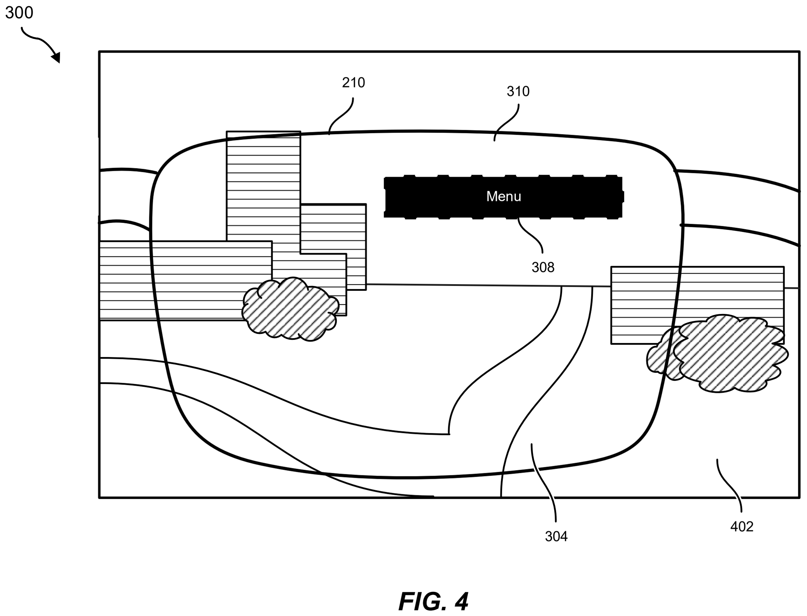

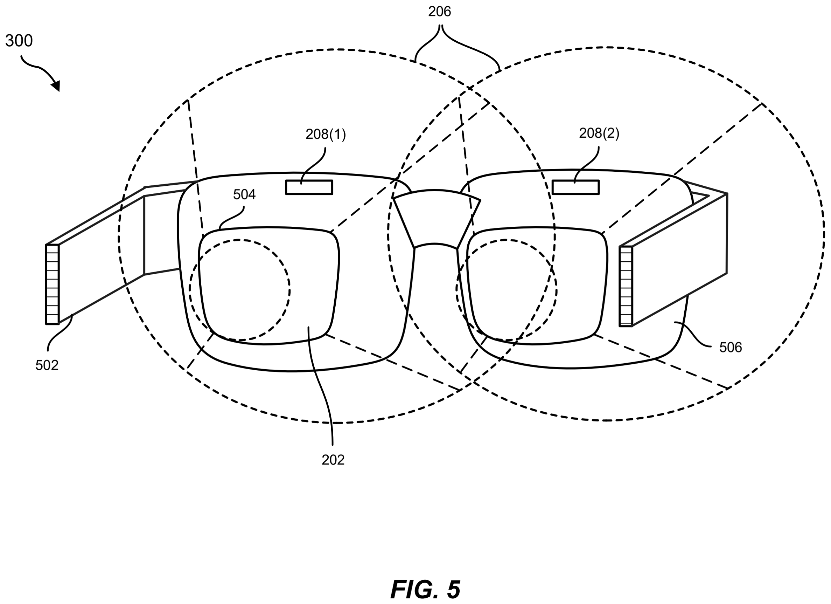

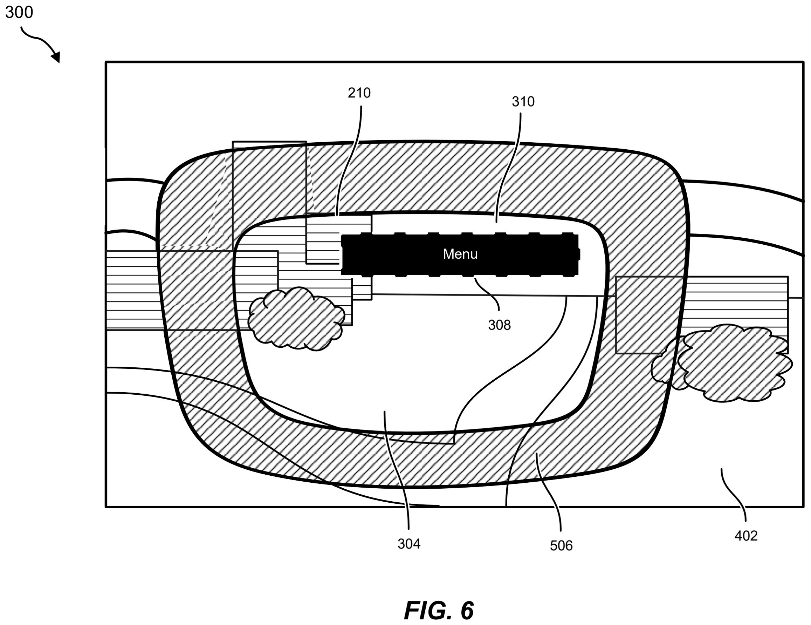

The following will provide, with reference to FIG. 1, detailed descriptions of an exemplary method of manufacturing mixed-reality displays with reduced borders. Detailed descriptions of example components and optics of a mixed-reality display will be described in connection with FIG. 2. Detailed descriptions of an example construction of a mixed-reality image will be provided in connection with FIG. 3. Furthermore, detailed descriptions of an example mixed-reality system displaying a mixed-reality image will be provided in connection with FIG. 4. Additionally, detailed descriptions of an example mixed-reality system with an example region hidden from a peripheral view of a user will be provided in connection with FIG. 5. Finally, detailed descriptions of another example mixed-reality system with an example dimmable window will be provided in connection with FIG. 6.

FIG. 1 shows an example method for manufacturing, assembling, using, adjusting, or otherwise configuring or creating the systems and apparatuses presented herein. The steps shown in FIG. 1 may be performed by any individual and/or by any suitable type or form of manual and/or automated apparatus. In particular, FIG. 1 illustrates a flow diagram of an exemplary method 100 for manufacturing. In one example, each of the steps shown in FIG. 1 may represent an algorithm whose structure includes and/or is represented by multiple sub-steps, examples of which will be provided in greater detail below.

As illustrated in FIG. 1 at step 110 one or more of the systems described herein may dimension an optical system to project a mixed-reality image to a user such that an angle of projection determines a region hidden from a peripheral view of the user. For example, as illustrated in FIG. 2, a mixed-reality display 200 may include an optical system 202 dimensioned to project a mixed-reality image to a user 214 such that an angle of projection 204 determines a region 206 hidden from a peripheral view of user 214.

The systems described herein may perform step 110 in a variety of ways. As used herein, the terms "artificial reality" and "virtual reality" generally refer to any form of system that creates digitally enhanced content for a three-dimensional environment. As used here, the terms "augmented reality" and "mixed reality" generally refer to any form of virtual reality system that incorporates digital content with a real-world environment.

In some examples, optical system 202 is dimensioned to project the mixed-reality image to user 214 by magnifying the mixed-reality image, wherein angle of projection 204 increases with the magnification. In some examples, such as the example of FIG. 2, optical system 202 may include a digital passthrough display 210 configured to display the mixed-reality image as a mixture of a real-world image and one or more virtual elements. As used herein, the term "digital passthrough display" generally refers to a method of displaying a digital image to replicate a view behind the display as if the display was transparent. In these examples, optical system 202 may also include a projector 212 disposed at a proximal side of digital passthrough display 210 to project the mixed-reality image to user 214 using pancake optics. As used herein, the term "pancake optics" generally refers to an optical imaging method that uses a folded optical path (e.g., reflected back and forth) for compact and high-quality imaging. For example, pancake optics may include a combination of a reflective polarizing film, a wave plate, and a semi-reflective mirror to fold the optical path from digital passthrough display, resulting in an overall thinner optical system 202. In the example of FIG. 2, the folded optical path is angled and magnified through the pancake optics and is directed to a position of an eye 216 of user 214. The image that reaches a pupil 218 of eye 216 is magnified from the image displayed by digital passthrough display 210, and angle of projection 204 creates a wider diameter of a field of view (FOV) of the mixed-reality image than the original diameter of digital passthrough display 210. As used herein, the term "field of view" generally refers to a measure of visible range from a particular spot, such as an arc around a focal point measured by a degree. In one example, the FOV may extend to a 200 degree arc around eye 216.

In some examples, angle of projection 204 may be adjusted to achieve a particular FOV for the mixed-reality image. For example, the design of optical system 202 may be altered based on an eye relief, an eye box, a gaze angle, and/or other factors to enable the virtual elements to be blended with the real-world image and projected at various distances. For example, optical system 202 may project a virtual element to appear closer to user 214 than real-world elements. In these examples, the term "eye relief" generally refers to a distance from a rear lens of optical system 202 and pupil 218, the term "eye box" generally refers to an area that eye 216 may move while still able to view the mixed-reality image, and the term "gaze angle" generally refers to the angle at which eye 216 is looking in comparison to the line between eye 216 and optical system 202.

In other examples, optical system 202 may utilize alternative methods to project the mixed-reality image. For example, optical system 202 may use a light field display that projects a three-dimensional holographic image. As another example, optical system 202 may use a method that folds visual rays multiple times. In these examples, optical system 202 may incorporate any form of image projection that enables an FOV larger than a physical display, such that components within the FOV and behind the projected mixed-reality image are hidden from view for user 214.

At step 120 one or more of the systems described herein may electronically couple one or more hardware components to the optical system and dimension the one or more hardware components to fit within the region such that the one or more hardware components are hidden from the user. For example, as illustrated in FIG. 2, mixed-reality display 200 may include a hardware component 208 that is electronically coupled to optical system 202 and is dimensioned to fit within region 206 such that hardware component 208 is hidden from user 214.

The systems described herein may perform step 120 in a variety of ways. In one example, hardware component 208 may include one or more cameras that capture the real-world image and transmits the real-world image to an image processing component. Additionally or alternatively, hardware component 208 may include one or more image processing components electronically coupled to one or more cameras and to optical system 202 to convert the real-world image into the mixed-reality image. In some examples, the image processing component may be configured to convert the real-world image by adjusting the real-world image to blend with the peripheral view of user 214, combining the real-world image with the one or more virtual elements, and transmitting the mixed-reality image to optical system 202.

In the example of FIG. 3, a mixed-reality system 300 may include a camera 302, representing a hardware component 208(1), that captures a real-world image 304 representing the real world blocked from view by optical system 202. In this example, camera 302 may transmit real-world image 304 to an image processing component 306, representing a hardware component 208(2). In this example, image processing component 306 may combine real-world image 304 with a virtual element 308 and/or may generate virtual element 308 to combine with image processing component 306. In this example, image processing component 306 may then create a mixed-reality image 310 and transmit mixed-reality image 310 to optical system 202, which may then project mixed-reality image 310 to user 214. In some examples, image processing component 306 may separately process real-world image 304 and virtual element 308 to send to optical system 202 for projection at varying distances.

As illustrated in FIG. 4, mixed-reality system 300 may include digital passthrough display 210 that displays mixed-reality image 310. In this example, mixed-reality image 310 may include real-world image 304 that is captured by a camera and then adjusted to match the position and size of a peripheral view 402. In this example, the camera may capture real-world image 304 based on the FOV of the projection of mixed-reality image 310 to ensure a match to peripheral view 402, such that mixed-reality image 310 appears to naturally abut peripheral view 402. In other examples, real-world image 304 may be adjusted based on a preferred effect. In the example of FIG. 4, virtual element 308 of a digital menu may be overlaid on real-world image 304 to create mixed-reality image 310. In some examples, virtual element 308 and real-world image 304 may be first combined as a single image and then projected to user 214. In other examples, virtual element 308 and real-world image 304 may be separately projected to user 214.

In some examples, camera 302 may be designed to enable real-time capture of the real-world environment as it would be viewed by user 214, creating a seamless transition between mixed-reality image 310 from digital passthrough display 210 and peripheral view 402. In these examples, image processing component 306 may adjust real-world image 304 to visually fit to a location of pupil 218. In these examples, camera 302 may be positioned along a rim of a frame or at another location, and image processing component 306 may correct any distortion such that real-world image 304 appears to be captured from the location of pupil 218. For example, a placement of camera 302 on a same axis as pupil 218 and closer to the location of pupil 218 may require less correction of distortion than a placement of camera 302 further away from pupil 218. In some examples, image processing component 306 may correct the distortion using calculations based on the location of pupil 218, a location of camera 302, a position of digital passthrough display 210, a position of projector 212, and/or any other suitable calculations. Additionally, multiple cameras in different locations may be combined to generate a more accurate real-world image 304 from the perspective of pupil 218. Various other algorithmic and/or optical solutions may also be used to achieve a more accurate real-world image 304.

As shown in FIG. 2, hardware component 208, and similarly hardware components 208(1) and 208(2) of FIG. 5, may be positioned along a top bar of mixed-reality system 300 and within region 206 to remain hidden from view. In these examples, hardware components 208, 208(1), and 208(2) are disposed between an edge of the FOV of the mixed-reality image and an edge of digital passthrough display 210. In these examples, the FOV of the mixed-reality image can obscure other components of mixed-reality system 300. In other examples, various numbers of hardware components may be disposed within the FOV such that all components are hidden from view. In various examples, hardware components may include integrated circuits, sensors, aggregators, and/or any other suitable components with a physical form. In the above examples, region 206 may generally form a cone extending from eye 216 and outward to encompass the projected mixed-reality image. Although illustrated in FIGS. 2 and 5 as located along a top section of mixed-reality system 300, various hardware components may be scattered throughout mixed-reality system 300 within region 206, such as along the bottom or sides or behind other components.

In one example, angle of projection 204 of FIG. 2 may be adjusted based on the magnification of optical system 202. For example, organic light-emitting diodes (OLEDs) can increase pixel density of displays, and microOLEDs can further improve the pixel density. With high pixel density, optical system 202 may utilize a bigger angle of projection 204, which further increases a cone representing region 206. Additionally or alternatively, technologies such as tethered or cloud computing that share resources may be leveraged to reduce the amount of hardware components integrated with mixed-reality system 300, thereby reducing an overall footprint of the space needed for hardware components. Furthermore, reducing the amount of hardware components also reduces the internal diameter for optical system 202, creating a more compact device. These examples enable all hardware components to be more easily contained within region 206.

At step 130 one or more of the systems described herein may couple a frame to hold the optical system and the one or more hardware components, wherein a rim of the frame is dimensioned to fit within the region. For example, as illustrated in FIG. 5, mixed-reality system 300 may include a frame 502 coupled to optical system 202 and hardware components 208(1)-(2) to hold optical system 202 and hardware components 208(1)-(2), wherein a rim 504 of frame 502 is dimensioned to fit within region 206.

The systems described herein may perform step 130 in a variety of ways. In one example, rim 504 of frame 502 may be angled to minimize a visible bezel of frame 502. As used herein, the term "bezel" generally refers to a frame or ring surrounding a display to hold the display, wherein a bezel may have a visible edge around the display. For example, the bezel may be reduced to follow angle of projection 204 of FIG. 2, with rim material outside of region 206 removed. Although illustrated in FIG. 5 as mixed-reality glasses or goggles, mixed-reality system 300 may represent other form factors, such as a headset or alternate display system, that may hold hardware and optical components in place. Additionally, mixed-reality system 300 may be a larger or smaller form factor.

In further examples, as in the example of FIG. 5, mixed-reality system 300 may include a dimmable window 506 coupled to frame 502 such that dimmable window 506 extends beyond optical system 202 to cover at least a portion of peripheral view 402, as shown in FIG. 4, of user 214. In these examples, dimmable window 506 may include an electrochromic glass that changes a tint of dimmable window 506 in response to an electrical signal from the frame. As used herein, the term "electrochromic glass" generally refers to a type of glass or plastic that may electronically vary its tint to become clear or opaque with the application of a voltage. In these examples, the electrical signal may affect electrons in dimmable window 506 to alter the way the material reflects and transmits light, thereby changing its tint. In these examples, the tint of dimmable window 506 may include a clear passthrough tint, a partial tint, a gradient tint, an opaque tint, and/or any other adjustable form of tinting. For example, dimmable window 506 may include a darker tint at the top and fade toward a clear tint along the bottom edges. In the above examples, a separate dimmable window may be paired with each eye, and the tints of the dimmable windows may be set to the same tint or different tints.

In the example of FIG. 6, dimmable window 506 may be positioned behind and around digital passthrough display 210. In this example, dimmable window 506 may be optionally tinted to provide a more immersive experience for user 214 to focus on mixed-reality image 310. In other examples, dimmable window 506 may be set to a clear tint to enable user 214 to see mixed-reality image 310 transition seamlessly to peripheral view 402. In one example, dimmable window 506 may be set to opaque to block out light from the user's environment, such as for a virtual theater experience focusing on the display projected by optical system 202. Thus, dimmable window 506 provides mechanical dimming for mixed-reality system 300 in addition to enabling digital dimming from digital passthrough display 210.

Although described as primarily for mixed-reality systems, the disclosed systems and methods may be applied to other forms of optics, such as VR optics, see-through optics, and/or other types of devices. In one example, the disclosed mixed-reality systems may be incorporated with other bezel-less or open periphery systems, such as by combining see-through optics and passthrough optics. In some examples, the disclosed systems may use varifocal cameras and/or varifocal displays to enable adjusting the distance of lenses, such as to account for a distance where a user's eyes are focused. In other examples, rather than electrochromic windows, the disclosed systems may incorporate other lower-resolution displays or other optics.

As explained above in connection with method 100 in FIG. 1, the disclosed systems and methods may, by determining a cone extending from a field of view of a digital display, identify a region where hardware and optical components may be placed out of view of a user wearing a mixed-reality device. By ensuring all components and a frame of the device are positioned within the cone region, the disclosed systems and methods may improve the experience of seamlessly viewing a mixed-reality display and a real-world environment visible from the periphery. Additionally, the disclosed systems and methods may improve the quality of the device by reducing frame bezels. Furthermore, the disclosed systems and methods enable the flexibility to choose between seamless mixed reality and immersive virtual reality by adding an electrochromic window around a digital display. Thus, systems and methods described herein may improve over traditional methods of creating a mixed-reality experience by reducing borders around digital images and improving the transition between the digital world and the real world.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, In some examples, AR may also be associated with applications, products, accessories, services, or some combination thereof, that are used to, for example, create content in an artificial reality and/or are otherwise used in (e.g., to perform activities in) an artificial reality.

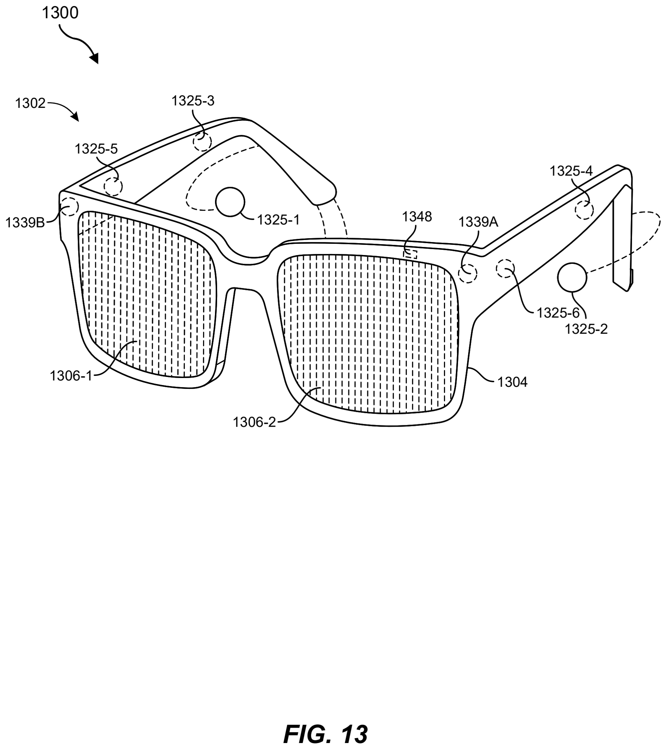

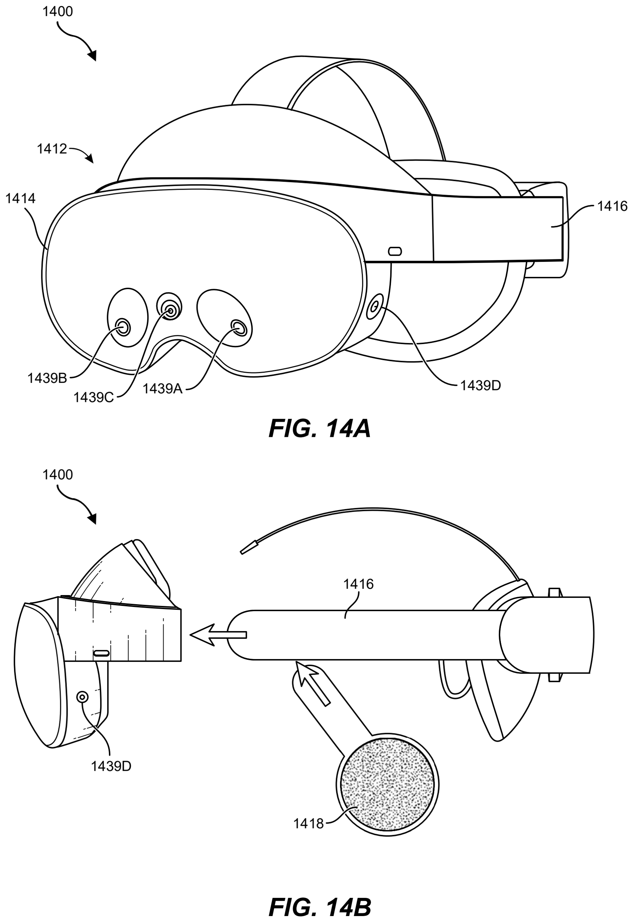

AR systems may be implemented in a variety of different form factors and configurations. Some AR systems may be designed to work without near-eye displays (NEDs). Other AR systems may include a NED that also provides visibility into the real world (such as, e.g., augmented-reality system 1300 in FIG. 13) or that visually immerses a user in an artificial reality (such as, e.g., virtual-reality system 1400 in FIGS. 14A and 14B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

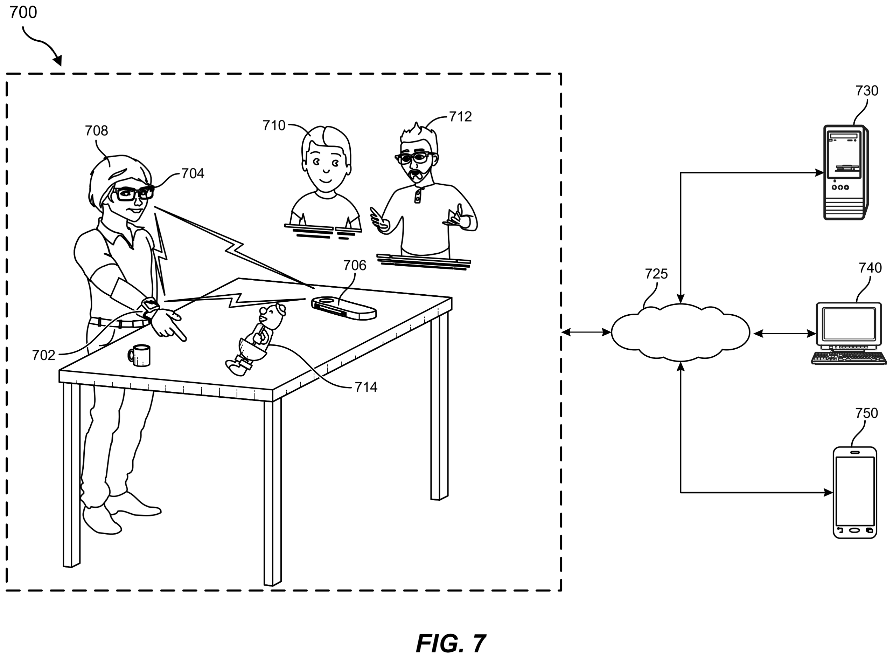

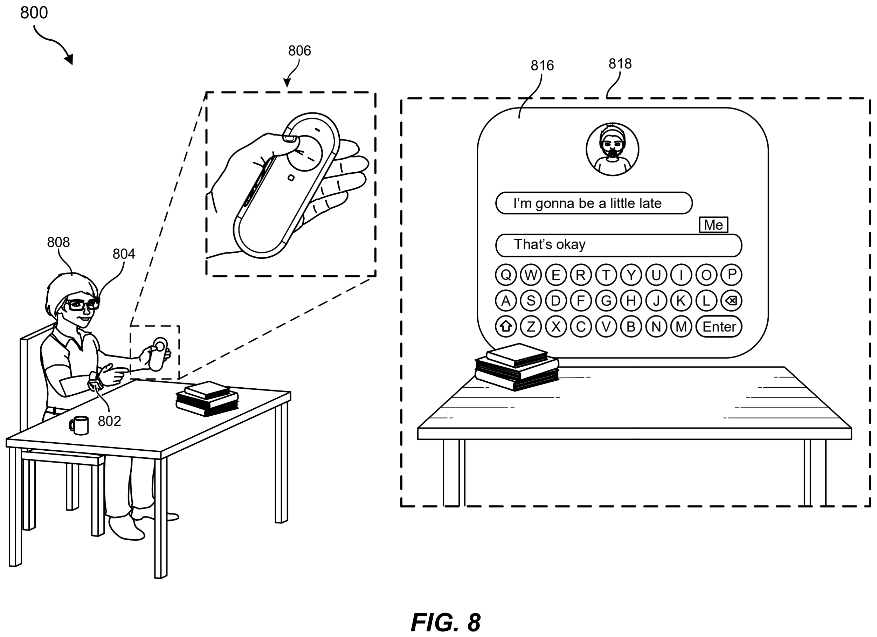

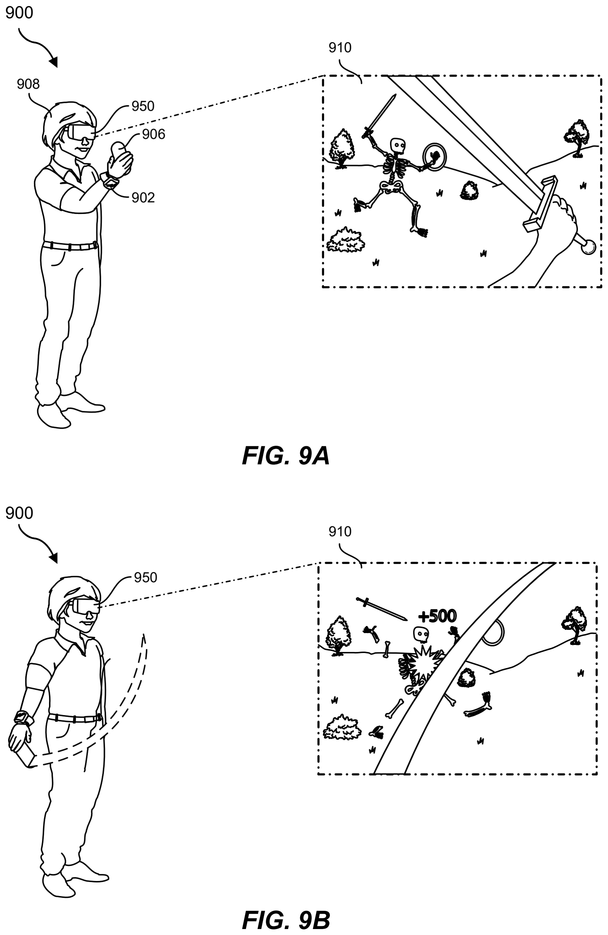

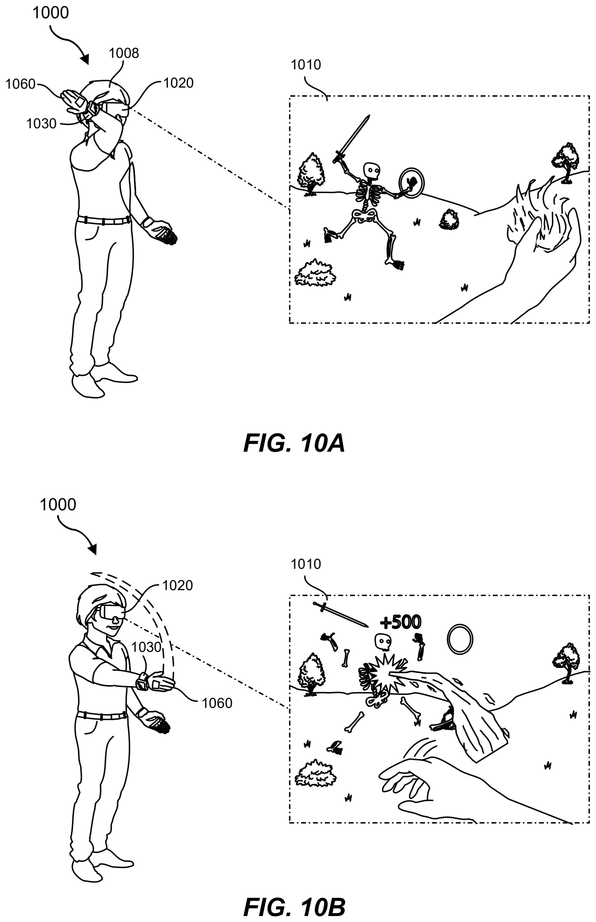

FIGS. 7-10B illustrate example artificial-reality (AR) systems. FIG. 7 shows a first AR system 700 and first example user interactions using a wrist-wearable device 702, a head-wearable device (e.g., AR glasses 1300), and/or a handheld intermediary processing device (HIPD) 706. FIG. 8 shows a second AR system 800 and second example user interactions using a wrist-wearable device 802, AR glasses 804, and/or an HIPD 806. FIGS. 9A and 9B show a third AR system 900 and third example user 908 interactions using a wrist-wearable device 902, a head-wearable device (e.g., VR headset 950), and/or an HIPD 906. FIGS. 10A and 10B show a fourth AR system 1000 and fourth example user 1008 interactions using a wrist-wearable device 1030, VR headset 1020, and/or a haptic device 1060 (e.g., wearable gloves).

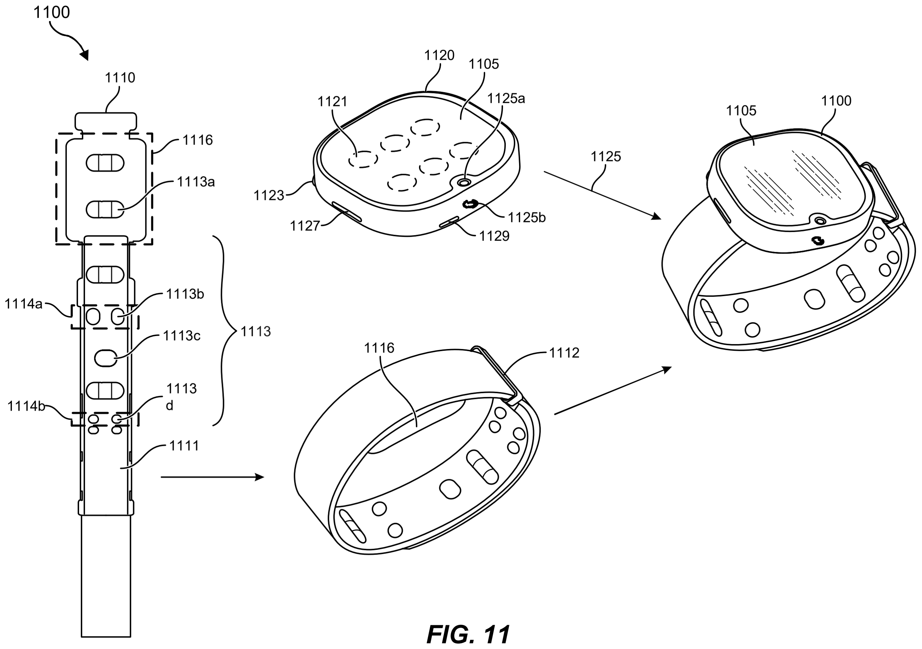

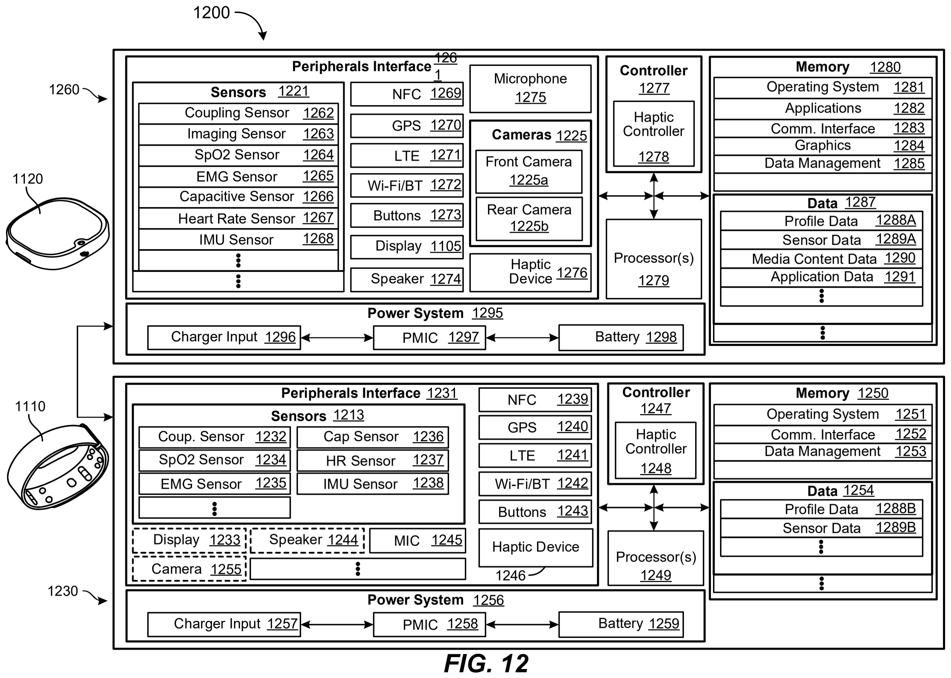

A wrist-wearable device 1100, which can be used for wrist-wearable device 702, 802, 902, 1030, and one or more of its components, are described below in reference to FIGS. 11 and 12; head-wearable devices 1300 and 1400, which can respectively be used for AR glasses 704, 804 or VR headset 950, 1020, and their one or more components are described below in reference to FIGS. 13-15.

Referring to FIG. 7, wrist-wearable device 702, AR glasses 704, and/or HIPD 706 can communicatively couple via a network 725 (e.g., cellular, near field, Wi-Fi, personal area network, wireless LAN, etc.). Additionally, wrist-wearable device 702, AR glasses 704, and/or HIPD 706 can also communicatively couple with one or more servers 730, computers 740 (e.g., laptops, computers, etc.), mobile devices 750 (e.g., smartphones, tablets, etc.), and/or other electronic devices via network 725 (e.g., cellular, near field, Wi-Fi, personal area network, wireless LAN, etc.).

In FIG. 7, a user 708 is shown wearing wrist-wearable device 702 and AR glasses 704 and having HIPD 706 on their desk. The wrist-wearable device 702, AR glasses 704, and HIPD 706 facilitate user interaction with an AR environment. In particular, as shown by first AR system 700, wrist-wearable device 702, AR glasses 704, and/or HIPD 706 cause presentation of one or more avatars 710, digital representations of contacts 712, and virtual objects 714. As discussed below, user 708 can interact with one or more avatars 710, digital representations of contacts 712, and virtual objects 714 via wrist-wearable device 702, AR glasses 704, and/or HIPD 706.

User 708 can use any of wrist-wearable device 702, AR glasses 704, and/or HIPD 706 to provide user inputs. For example, user 708 can perform one or more hand gestures that are detected by wrist-wearable device 702 (e.g., using one or more EMG sensors and/or IMUs, described below in reference to FIGS. 11 and 12) and/or AR glasses 704 (e.g., using one or more image sensor or camera, described below in reference to FIGS. 13-10) to provide a user input. Alternatively, or additionally, user 708 can provide a user input via one or more touch surfaces of wrist-wearable device 702, AR glasses 704, HIPD 706, and/or voice commands captured by a microphone of wrist-wearable device 702, AR glasses 704, and/or HIPD 706. In some examples, wrist-wearable device 702, AR glasses 704, and/or HIPD 706 include a digital assistant to help user 708 in providing a user input (e.g., completing a sequence of operations, suggesting different operations or commands, providing reminders, confirming a command, etc.). In some examples, user 708 can provide a user input via one or more facial gestures and/or facial expressions. For example, cameras of wrist-wearable device 702, AR glasses 704, and/or HIPD 706 can track eyes of user 708 for navigating a user interface.

Wrist-wearable device 702, AR glasses 704, and/or HIPD 706 can operate alone or in conjunction to allow user 708 to interact with the AR environment. In some examples, HIPD 706 is configured to operate as a central hub or control center for the wrist-wearable device 702, AR glasses 704, and/or another communicatively coupled device. For example, user 708 can provide an input to interact with the AR environment at any of wrist-wearable device 702, AR glasses 704, and/or HIPD 706, and HIPD 706 can identify one or more back-end and front-end tasks to cause the performance of the requested interaction and distribute instructions to cause the performance of the one or more back-end and front-end tasks at wrist-wearable device 702, AR glasses 704, and/or HIPD 706. In some examples, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). HIPD 706 can perform the back-end tasks and provide wrist-wearable device 702 and/or AR glasses 704 operational data corresponding to the performed back-end tasks such that wrist-wearable device 702 and/or AR glasses 704 can perform the front-end tasks. In this way, HIPD 706, which has more computational resources and greater thermal headroom than wrist-wearable device 702 and/or AR glasses 704, performs computationally intensive tasks and reduces the computer resource utilization and/or power usage of wrist-wearable device 702 and/or AR glasses 704.

In the example shown by first AR system 700, HIPD 706 identifies one or more back-end tasks and front-end tasks associated with a user request to initiate an AR video call with one or more other users (represented by avatar 710 and the digital representation of contact 712) and distributes instructions to cause the performance of the one or more back-end tasks and front-end tasks. In particular, HIPD 706 performs back-end tasks for processing and/or rendering image data (and other data) associated with the AR video call and provides operational data associated with the performed back-end tasks to AR glasses 704 such that the AR glasses 704 perform front-end tasks for presenting the AR video call (e.g., presenting avatar 710 and digital representation of contact 712).

In some examples, HIPD 706 can operate as a focal or anchor point for causing the presentation of information. This allows user 708 to be generally aware of where information is presented. For example, as shown in first AR system 700, avatar 710 and the digital representation of contact 712 are presented above HIPD 706. In particular, HIPD 706 and AR glasses 704 operate in conjunction to determine a location for presenting avatar 710 and the digital representation of contact 712. In some examples, information can be presented a predetermined distance from HIPD 706 (e.g., within 5 meters). For example, as shown in first AR system 700, virtual object 714 is presented on the desk some distance from HIPD 706. Similar to the above example, HIPD 706 and AR glasses 704 can operate in conjunction to determine a location for presenting virtual object 714. Alternatively, In some examples, presentation of information is not bound by HIPD 706. More specifically, avatar 710, digital representation of contact 712, and virtual object 714 do not have to be presented within a predetermined distance of HIPD 706.

User inputs provided at wrist-wearable device 702, AR glasses 704, and/or HIPD 706 are coordinated such that the user can use any device to initiate, continue, and/or complete an operation. For example, user 708 can provide a user input to AR glasses 704 to cause AR glasses 704 to present virtual object 714 and, while virtual object 714 is presented by AR glasses 704, user 708 can provide one or more hand gestures via wrist-wearable device 702 to interact and/or manipulate virtual object 714.

FIG. 8 shows a user 808 wearing a wrist-wearable device 802 and AR glasses 804, and holding an HIPD 806. In second AR system 800, the wrist-wearable device 802, AR glasses 804, and/or HIPD 806 are used to receive and/or provide one or more messages to a contact of user 808. In particular, wrist-wearable device 802, AR glasses 804, and/or HIPD 806 detect and coordinate one or more user inputs to initiate a messaging application and prepare a response to a received message via the messaging application.

In some examples, user 808 initiates, via a user input, an application on wrist-wearable device 802, AR glasses 804, and/or HIPD 806 that causes the application to initiate on at least one device. For example, in second AR system 800, user 808 performs a hand gesture associated with a command for initiating a messaging application (represented by messaging user interface 816), wrist-wearable device 802 detects the hand gesture and, based on a determination that user 808 is wearing AR glasses 804, causes AR glasses 804 to present a messaging user interface 816 of the messaging application. AR glasses 804 can present messaging user interface 816 to user 808 via its display (e.g., as shown by a field of view 818 of user 808). In some examples, the application is initiated and executed on the device (e.g., wrist-wearable device 802, AR glasses 804, and/or HIPD 806) that detects the user input to initiate the application, and the device provides another device operational data to cause the presentation of the messaging application. For example, wrist-wearable device 802 can detect the user input to initiate a messaging application, initiate and run the messaging application, and provide operational data to AR glasses 804 and/or HIPD 806 to cause presentation of the messaging application. Alternatively, the application can be initiated and executed at a device other than the device that detected the user input. For example, wrist-wearable device 802 can detect the hand gesture associated with initiating the messaging application and cause HIPD 806 to run the messaging application and coordinate the presentation of the messaging application.

Further, user 808 can provide a user input provided at wrist-wearable device 802, AR glasses 804, and/or HIPD 806 to continue and/or complete an operation initiated at another device. For example, after initiating the messaging application via wrist-wearable device 802 and while AR glasses 804 present messaging user interface 816, user 808 can provide an input at HIPD 806 to prepare a response (e.g., shown by the swipe gesture performed on HIPD 806). Gestures performed by user 808 on HIPD 806 can be provided and/or displayed on another device. For example, a swipe gestured performed on HIPD 806 is displayed on a virtual keyboard of messaging user interface 816 displayed by AR glasses 804.

In some examples, wrist-wearable device 802, AR glasses 804, HIPD 806, and/or any other communicatively coupled device can present one or more notifications to user 808. The notification can be an indication of a new message, an incoming call, an application update, a status update, etc. User 808 can select the notification via wrist-wearable device 802, AR glasses 804, and/or HIPD 806 and can cause presentation of an application or operation associated with the notification on at least one device. For example, user 808 can receive a notification that a message was received at wrist-wearable device 802, AR glasses 804, HIPD 806, and/or any other communicatively coupled device and can then provide a user input at wrist-wearable device 802, AR glasses 804, and/or HIPD 806 to review the notification, and the device detecting the user input can cause an application associated with the notification to be initiated and/or presented at wrist-wearable device 802, AR glasses 804, and/or HIPD 806.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 804 can present to user 808 game application data, and HIPD 806 can be used as a controller to provide inputs to the game. Similarly, user 808 can use wrist-wearable device 802 to initiate a camera of AR glasses 804, and user 808 can use wrist-wearable device 802, AR glasses 804, and/or HIPD 806 to manipulate the image capture (e.g., zoom in or out, apply filters, etc.) and capture image data.

Users may interact with the devices disclosed herein in a variety of ways. For example, as shown in FIGS. 9A and 9B, a user 908 may interact with an AR system 900 by donning a VR headset 950 while holding HIPD 906 and wearing wrist-wearable device 902. In this example, AR system 900 may enable a user to interact with a game 910 by swiping their arm. One or more of VR headset 950, HIPD 906, and wrist-wearable device 902 may detect this gesture and, in response, may display a sword strike in game 910. Similarly, in FIGS. 10A and 10B, a user 1008 may interact with an AR system 1000 by donning a VR headset 1020 while wearing haptic device 1060 and wrist-wearable device 1030. In this example, AR system 1000 may enable a user to interact with a game 1010 by swiping their arm. One or more of VR headset 1020, haptic device 1060, and wrist-wearable device 1030 may detect this gesture and, in response, may display a spell being cast in game 910.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some examples discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some examples, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by examples described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various examples described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configure to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 802.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some examples, a communication interface can refer to a software layer that enables different software programs to communicate with each other (e.g., application programming interfaces (APIs), protocols like HTTP and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 11 and 12 illustrate an example wrist-wearable device 1100 and an example computer system 1200. Wrist-wearable device 1100 is an instance of wearable device 702 described in FIG. 7 herein, such that the wearable device 702 should be understood to have the features of the wrist-wearable device 1100 and vice versa. FIG. 12 illustrates components of the wrist-wearable device 1100, which can be used individually or in combination, including combinations that include other electronic devices and/or electronic components.

FIG. 11 shows a wearable band 1110 and a watch body 1120 (or capsule) being coupled, as discussed below, to form wrist-wearable device 1100. Wrist-wearable device 1100 can perform various functions and/or operations associated with navigating through user interfaces and selectively opening applications as well as the functions and/or operations described above with reference to FIGS. 7-10B.

As will be described in more detail below, operations executed by wrist-wearable device 1100 can include (i) presenting content to a user (e.g., displaying visual content via a display 1105), (ii) detecting (e.g., sensing) user input (e.g., sensing a touch on peripheral button 1123 and/or at a touch screen of the display 1105, a hand gesture detected by sensors (e.g., biopotential sensors)), (iii) sensing biometric data (e.g., neuromuscular signals, heart rate, temperature, sleep, etc.) via one or more sensors 1113, messaging (e.g., text, speech, video, etc.); image capture via one or more imaging devices or cameras 1125, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 1120, independently in wearable band 1110, and/or via an electronic communication between watch body 1120 and wearable band 1110. In some examples, functions can be executed on wrist-wearable device 1100 while an AR environment is being presented (e.g., via one of AR systems 700 to 1000). The wearable devices described herein can also be used with other types of AR environments.

Wearable band 1110 can be configured to be worn by a user such that an inner surface of a wearable structure 1111 of wearable band 1110 is in contact with the user's skin. In this example, when worn by a user, sensors 1113 may contact the user's skin. In some examples, one or more of sensors 1113 can sense biometric data such as a user's heart rate, a saturated oxygen level, temperature, sweat level, neuromuscular signals, or a combination thereof. One or more of sensors 1113 can also sense data about a user's environment including a user's motion, altitude, location, orientation, gait, acceleration, position, or a combination thereof. In some examples, one or more of sensors 1113 can be configured to track a position and/or motion of wearable band 1110. One or more of sensors 1113 can include any of the sensors defined above and/or discussed below with respect to FIG. 11.

One or more of sensors 1113 can be distributed on an inside and/or an outside surface of wearable band 1110. In some examples, one or more of sensors 1113 are uniformly spaced along wearable band 1110. Alternatively, In some examples, one or more of sensors 1113 are positioned at distinct points along wearable band 1110. As shown in FIG. 11, one or more of sensors 1113 can be the same or distinct. For example, In some examples, one or more of sensors 1113 can be shaped as a pill (e.g., sensor 1113a), an oval, a circle a square, an oblong (e.g., sensor 1113c) and/or any other shape that maintains contact with the user's skin (e.g., such that neuromuscular signal and/or other biometric data can be accurately measured at the user's skin). In some examples, one or more sensors of 1113 are aligned to form pairs of sensors (e.g., for sensing neuromuscular signals based on differential sensing within each respective sensor). For example, sensor 1113b may be aligned with an adjacent sensor to form sensor pair 1114a and sensor 1113d may be aligned with an adjacent sensor to form sensor pair 1114b. In some examples, wearable band 1110 does not have a sensor pair. Alternatively, In some examples, wearable band 1110 has a predetermined number of sensor pairs (one pair of sensors, three pairs of sensors, four pairs of sensors, six pairs of sensors, sixteen pairs of sensors, etc.).

Wearable band 1110 can include any suitable number of sensors 1113. In some examples, the number and arrangement of sensors 1113 depends on the particular application for which wearable band 1110 is used. For instance, wearable band 1110 can be configured as an armband, wristband, or chest-band that include a plurality of sensors 1113 with different number of sensors 1113, a variety of types of individual sensors with the plurality of sensors 1113, and different arrangements for each use case, such as medical use cases as compared to gaming or general day-to-day use cases.

In accordance with some examples, wearable band 1110 further includes an electrical ground electrode and a shielding electrode. The electrical ground and shielding electrodes, like the sensors 1113, can be distributed on the inside surface of the wearable band 1110 such that they contact a portion of the user's skin. For example, the electrical ground and shielding electrodes can be at an inside surface of a coupling mechanism 1116 or an inside surface of a wearable structure 1111. The electrical ground and shielding electrodes can be formed and/or use the same components as sensors 1113. In some examples, wearable band 1110 includes more than one electrical ground electrode and more than one shielding electrode.

Sensors 1113 can be formed as part of wearable structure 1111 of wearable band 1110. In some examples, sensors 1113 are flush or substantially flush with wearable structure 1111 such that they do not extend beyond the surface of wearable structure 1111. While flush with wearable structure 1111, sensors 1113 are still configured to contact the user's skin (e.g., via a skin-contacting surface). Alternatively, In some examples, sensors 1113 extend beyond wearable structure 1111 a predetermined distance (e.g., 0.1 - 2 mm) to make contact and depress into the user's skin. In some example, sensors 1113 are coupled to an actuator (not shown) configured to adjust an extension height (e.g., a distance from the surface of wearable structure 1111) of sensors 1113 such that sensors 1113 make contact and depress into the user's skin. In some examples, the actuators adjust the extension height between 0.01 mm - 1.2 mm. This may allow a the user to customize the positioning of sensors 1113 to improve the overall comfort of the wearable band 1110 when worn while still allowing sensors 1113 to contact the user's skin. In some examples, sensors 1113 are indistinguishable from wearable structure 1111 when worn by the user.

Wearable structure 1111 can be formed of an elastic material, elastomers, etc., configured to be stretched and fitted to be worn by the user. In some examples, wearable structure 1111 is a textile or woven fabric. As described above, sensors 1113 can be formed as part of a wearable structure 1111. For example, sensors 1113 can be molded into the wearable structure 1111, be integrated into a woven fabric (e.g., sensors 1113 can be sewn into the fabric and mimic the pliability of fabric and can and/or be constructed from a series woven strands of fabric).

Wearable structure 1111 can include flexible electronic connectors that interconnect sensors 1113, the electronic circuitry, and/or other electronic components (described below in reference to FIG. 12) that are enclosed in wearable band 1110. In some examples, the flexible electronic connectors are configured to interconnect sensors 1113, the electronic circuitry, and/or other electronic components of wearable band 1110 with respective sensors and/or other electronic components of another electronic device (e.g., watch body 1120). The flexible electronic connectors are configured to move with wearable structure 1111 such that the user adjustment to wearable structure 1111 (e.g., resizing, pulling, folding, etc.) does not stress or strain the electrical coupling of components of wearable band 1110.

As described above, wearable band 1110 is configured to be worn by a user. In particular, wearable band 1110 can be shaped or otherwise manipulated to be worn by a user. For example, wearable band 1110 can be shaped to have a substantially circular shape such that it can be configured to be worn on the user's lower arm or wrist. Alternatively, wearable band 1110 can be shaped to be worn on another body part of the user, such as the user's upper arm (e.g., around a bicep), forearm, chest, legs, etc. Wearable band 1110 can include a retaining mechanism 1112 (e.g., a buckle, a hook and loop fastener, etc.) for securing wearable band 1110 to the user's wrist or other body part. While wearable band 1110 is worn by the user, sensors 1113 sense data (referred to as sensor data) from the user's skin. In some examples, sensors 1113 of wearable band 1110 obtain (e.g., sense and record) neuromuscular signals.

The sensed data (e.g., sensed neuromuscular signals) can be used to detect and/or determine the user's intention to perform certain motor actions. In some examples, sensors 1113 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 1105 of wrist-wearable device 1100 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 1113 can be used to provide a user with an enhanced interaction with a physical object (e.g., devices communicatively coupled with wearable band 1110) and/or a virtual object in an artificial-reality application generated by an artificial-reality system (e.g., user interface objects presented on the display 1105, or another computing device (e.g., a smartphone)).

In some examples, wearable band 1110 includes one or more haptic devices 1246 (e.g., a vibratory haptic actuator) that are configured to provide haptic feedback (e.g., a cutaneous and/or kinesthetic sensation, etc.) to the user's skin. Sensors 1113 and/or haptic devices 1246 (shown in FIG. 12) can be configured to operate in conjunction with multiple applications including, without limitation, health monitoring, social media, games, and artificial reality (e.g., the applications associated with artificial reality).

Wearable band 1110 can also include coupling mechanism 1116 for detachably coupling a capsule (e.g., a computing unit) or watch body 1120 (via a coupling surface of the watch body 1120) to wearable band 1110. For example, a cradle or a shape of coupling mechanism 1116 can correspond to shape of watch body 1120 of wrist-wearable device 1100. In particular, coupling mechanism 1116 can be configured to receive a coupling surface proximate to the bottom side of watch body 1120 (e.g., a side opposite to a front side of watch body 1120 where display 1105 is located), such that a user can push watch body 1120 downward into coupling mechanism 1116 to attach watch body 1120 to coupling mechanism 1116. In some examples, coupling mechanism 1116 can be configured to receive a top side of the watch body 1120 (e.g., a side proximate to the front side of watch body 1120 where display 1105 is located) that is pushed upward into the cradle, as opposed to being pushed downward into coupling mechanism 1116. In some examples, coupling mechanism 1116 is an integrated component of wearable band 1110 such that wearable band 1110 and coupling mechanism 1116 are a single unitary structure. In some examples, coupling mechanism 1116 is a type of frame or shell that allows watch body 1120 coupling surface to be retained within or on wearable band 1110 coupling mechanism 1116 (e.g., a cradle, a tracker band, a support base, a clasp, etc.).

Coupling mechanism 1116 can allow for watch body 1120 to be detachably coupled to the wearable band 1110 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 1120 to wearable band 1110 and to decouple the watch body 1120 from the wearable band 1110. For example, a user can twist, slide, turn, push, pull, or rotate watch body 1120 relative to wearable band 1110, or a combination thereof, to attach watch body 1120 to wearable band 1110 and to detach watch body 1120 from wearable band 1110. Alternatively, as discussed below, In some examples, the watch body 1120 can be decoupled from the wearable band 1110 by actuation of a release mechanism 1129.

Wearable band 1110 can be coupled with watch body 1120 to increase the functionality of wearable band 1110 (e.g., converting wearable band 1110 into wrist-wearable device 1100, adding an additional computing unit and/or battery to increase computational resources and/or a battery life of wearable band 1110, adding additional sensors to improve sensed data, etc.). As described above, wearable band 1110 and coupling mechanism 1116 are configured to operate independently (e.g., execute functions independently) from watch body 1120. For example, coupling mechanism 1116 can include one or more sensors 1113 that contact a user's skin when wearable band 1110 is worn by the user, with or without watch body 1120 and can provide sensor data for determining control commands.

A user can detach watch body 1120 from wearable band 1110 to reduce the encumbrance of wrist-wearable device 1100 to the user. For examples in which watch body 1120 is removable, watch body 1120 can be referred to as a removable structure, such that in these examples wrist-wearable device 1100 includes a wearable portion (e.g., wearable band 1110) and a removable structure (e.g., watch body 1120).

Turning to watch body 1120, in some examples watch body 1120 can have a substantially rectangular or circular shape. Watch body 1120 is configured to be worn by the user on their wrist or on another body part. More specifically, watch body 1120 is sized to be easily carried by the user, attached on a portion of the user's clothing, and/or coupled to wearable band 1110 (forming the wrist-wearable device 1100). As described above, watch body 1120 can have a shape corresponding to coupling mechanism 1116 of wearable band 1110. In some examples, watch body 1120 includes a single release mechanism 1129 or multiple release mechanisms (e.g., two release mechanisms 1129 positioned on opposing sides of watch body 1120, such as spring-loaded buttons) for decoupling watch body 1120 from wearable band 1110. Release mechanism 1129 can include, without limitation, a button, a knob, a plunger, a handle, a lever, a fastener, a clasp, a dial, a latch, or a combination thereof.

A user can actuate release mechanism 1129 by pushing, turning, lifting, depressing, shifting, or performing other actions on release mechanism 1129. Actuation of release mechanism 1129 can release (e.g., decouple) watch body 1120 from coupling mechanism 1116 of wearable band 1110, allowing the user to use watch body 1120 independently from wearable band 1110 and vice versa. For example, decoupling watch body 1120 from wearable band 1110 can allow a user to capture images using rear-facing camera 1125b. Although release mechanism 1129 is shown positioned at a corner of watch body 1120, release mechanism 1129 can be positioned anywhere on watch body 1120 that is convenient for the user to actuate. In addition, In some examples, wearable band 1110 can also include a respective release mechanism for decoupling watch body 1120 from coupling mechanism 1116. In some examples, release mechanism 1129 is optional and watch body 1120 can be decoupled from coupling mechanism 1116 as described above (e.g., via twisting, rotating, etc.).

Watch body 1120 can include one or more peripheral buttons 1123 and 1127 for performing various operations at watch body 1120. For example, peripheral buttons 1123 and 1127 can be used to turn on or wake (e.g., transition from a sleep state to an active state) display 1105, unlock watch body 1120, increase or decrease a volume, increase or decrease a brightness, interact with one or more applications, interact with one or more user interfaces, etc. Additionally or alternatively, In some examples, display 1105 operates as a touch screen and allows the user to provide one or more inputs for interacting with watch body 1120.

In some examples, watch body 1120 includes one or more sensors 1121. Sensors 1121 of watch body 1120 can be the same or distinct from sensors 1113 of wearable band 1110. Sensors 1121 of watch body 1120 can be distributed on an inside and/or an outside surface of watch body 1120. In some examples, sensors 1121 are configured to contact a user's skin when watch body 1120 is worn by the user. For example, sensors 1121 can be placed on the bottom side of watch body 1120 and coupling mechanism 1116 can be a cradle with an opening that allows the bottom side of watch body 1120 to directly contact the user's skin. Alternatively, In some examples, watch body 1120 does not include sensors that are configured to contact the user's skin (e.g., including sensors internal and/or external to the watch body 1120 that are configured to sense data of watch body 1120 and the surrounding environment). In some examples, sensors 1121 are configured to track a position and/or motion of watch body 1120.

Watch body 1120 and wearable band 1110 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 1120 and wearable band 1110 can share data sensed by sensors 1113 and 1121, as well as application and device specific information (e.g., active and/or available applications, output devices (e.g., displays, speakers, etc.), input devices (e.g., touch screens, microphones, imaging sensors, etc.).

In some examples, watch body 1120 can include, without limitation, a front-facing camera 1125a and/or a rear-facing camera 1125b, sensors 1121 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 1263), a touch sensor, a sweat sensor, etc.). In some examples, watch body 1120 can include one or more haptic devices 1276 (e.g., a vibratory haptic actuator) that is configured to provide haptic feedback (e.g., a cutaneous and/or kinesthetic sensation, etc.) to the user. Sensors 1221 and/or haptic device 1276 can also be configured to operate in conjunction with multiple applications including, without limitation, health monitoring applications, social media applications, game applications, and artificial reality applications (e.g., the applications associated with artificial reality).

As described above, watch body 1120 and wearable band 1110, when coupled, can form wrist-wearable device 1100. When coupled, watch body 1120 and wearable band 1110 may operate as a single device to execute functions (operations, detections, communications, etc.) described herein. In some examples, each device may be provided with particular instructions for performing the one or more operations of wrist-wearable device 1100. For example, in accordance with a determination that watch body 1120 does not include neuromuscular signal sensors, wearable band 1110 can include alternative instructions for performing associated instructions (e.g., providing sensed neuromuscular signal data to watch body 1120 via a different electronic device). Operations of wrist-wearable device 1100 can be performed by watch body 1120 alone or in conjunction with wearable band 1110 (e.g., via respective processors and/or hardware components) and vice versa. In some examples, operations of wrist-wearable device 1100, watch body 1120, and/or wearable band 1110 can be performed in conjunction with one or more processors and/or hardware components.

As described below with reference to the block diagram of FIG. 12, wearable band 1110 and/or watch body 1120 can each include independent resources required to independently execute functions. For example, wearable band 1110 and/or watch body 1120 can each include a power source (e.g., a battery), a memory, data storage, a processor (e.g., a central processing unit (CPU)), communications, a light source, and/or input/output devices.

FIG. 12 shows block diagrams of a computing system 1230 corresponding to wearable band 1110 and a computing system 1260 corresponding to watch body 1120. Computing system 1200 of wrist-wearable device 1100 may include a combination of components of wearable band computing system 1230 and watch body computing system 1260.

Watch body 1120 and/or wearable band 1110 can include one or more components shown in watch body computing system 1260. In some examples, a single integrated circuit may include all or a substantial portion of the components of watch body computing system 1260 included in a single integrated circuit. Alternatively, In some examples, components of the watch body computing system 1260 may be included in a plurality of integrated circuits that are communicatively coupled. In some examples, watch body computing system 1260 may be configured to couple (e.g., via a wired or wireless connection) with wearable band computing system 1230, which may allow the computing systems to share components, distribute tasks, and/or perform other operations described herein (individually or as a single device).

Watch body computing system 1260 can include one or more processors 1279, a controller 1277, a peripherals interface 1261, a power system 1295, and memory (e.g., a memory 1280).

Power system 1295 can include a charger input 1296, a power-management integrated circuit (PMIC) 1297, and a battery 1298. In some examples, a watch body 1120 and a wearable band 1110 can have respective batteries (e.g., battery 1298 and 1259) and can share power with each other. Watch body 1120 and wearable band 1110 can receive a charge using a variety of techniques. In some examples, watch body 1120 and wearable band 1110 can use a wired charging assembly (e.g., power cords) to receive the charge. Alternatively, or in addition, watch body 1120 and/or wearable band 1110 can be configured for wireless charging. For example, a portable charging device can be designed to mate with a portion of watch body 1120 and/or wearable band 1110 and wirelessly deliver usable power to battery 1298 of watch body 1120 and/or battery 1259 of wearable band 1110. Watch body 1120 and wearable band 1110 can have independent power systems (e.g., power system 1295 and 1256, respectively) to enable each to operate independently. Watch body 1120 and wearable band 1110 can also share power (e.g., one can charge the other) via respective PMICs (e.g., PMICs 1297 and 1258) and charger inputs (e.g., 1257 and 1296) that can share power over power and ground conductors and/or over wireless charging antennas.

In some examples, peripherals interface 1261 can include one or more sensors 1221. Sensors 1221 can include one or more coupling sensors 1262 for detecting when watch body 1120 is coupled with another electronic device (e.g., a wearable band 1110). Sensors 1221 can include one or more imaging sensors 1263 (e.g., one or more of cameras 1225, and/or separate imaging sensors 1263 (e.g., thermal-imaging sensors)). In some examples, sensors 1221 can include one or more SpO2 sensors 1264. In some examples, sensors 1221 can include one or more biopotential-signal sensors (e.g., EMG sensors 1265, which may be disposed on an interior, user-facing portion of watch body 1120 and/or wearable band 1110). In some examples, sensors 1221 may include one or more capacitive sensors 1266. In some examples, sensors 1221 may include one or more heart rate sensors 1267. In some examples, sensors 1221 may include one or more IMU sensors 1268. In some examples, one or more IMU sensors 1268 can be configured to detect movement of a user's hand or other location where watch body 1120 is placed or held.

In some examples, one or more of sensors 1221 may provide an example human-machine interface. For example, a set of neuromuscular sensors, such as EMG sensors 1265, may be arranged circumferentially around wearable band 1110 with an interior surface of EMG sensors 1265 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 1110 can be used to generate control information for controlling an augmented reality system, a robot, controlling a vehicle, scrolling through text, controlling a virtual avatar, or any other suitable control task.

In some examples, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other examples, at least some signal processing of the output of the sensing components can be performed in software such as processors 1279. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 1265 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the examples described herein can also be implemented in wearable interfaces with other types of sensors including, but not limited to, mechanomyography (MMG) sensors, sonomyography (SMG) sensors, and electrical impedance tomography (EIT) sensors.

In some examples, peripherals interface 1261 includes a near-field communication (NFC) component 1269, a global-position system (GPS) component 1270, a long-term evolution (LTE) component 1271, and/or a Wi-Fi and/or Bluetooth communication component 1272. In some examples, peripherals interface 1261 includes one or more buttons 1273 (e.g., peripheral buttons 1123 and 1127 in FIG. 11), which, when selected by a user, cause operation to be performed at watch body 1120. In some examples, the peripherals interface 1261 includes one or more indicators, such as a light emitting diode (LED), to provide a user with visual indicators (e.g., message received, low battery, active microphone and/or camera, etc.).

Watch body 1120 can include at least one display 1105 for displaying visual representations of information or data to a user, including user-interface elements and/or three-dimensional virtual objects. The display can also include a touch screen for inputting user inputs, such as touch gestures, swipe gestures, and the like. Watch body 1120 can include at least one speaker 1274 and at least one microphone 1275 for providing audio signals to the user and receiving audio input from the user. The user can provide user inputs through microphone 1275 and can also receive audio output from speaker 1274 as part of a haptic event provided by haptic controller 1278. Watch body 1120 can include at least one camera 1225, including a front camera 1225a and a rear camera 1225b. Cameras 1225 can include ultra-wide-angle cameras, wide angle cameras, fish-eye cameras, spherical cameras, telephoto cameras, depth-sensing cameras, or other types of cameras.

Watch body computing system 1260 can include one or more haptic controllers 1278 and associated componentry (e.g., haptic devices 1276) for providing haptic events at watch body 1120 (e.g., a vibrating sensation or audio output in response to an event at the watch body 1120). Haptic controllers 1278 can communicate with one or more haptic devices 1276, such as electroacoustic devices, including a speaker of the one or more speakers 1274 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 1278 can provide haptic events to that are capable of being sensed by a user of watch body 1120. In some examples, one or more haptic controllers 1278 can receive input signals from an application of applications 1282.

In some examples, wearable band computing system 1230 and/or watch body computing system 1260 can include memory 1280, which can be controlled by one or more memory controllers of controllers 1277. In some examples, software components stored in memory 1280 include one or more applications 1282 configured to perform operations at the watch body 1120. In some examples, one or more applications 1282 may include games, word processors, messaging applications, calling applications, web browsers, social media applications, media streaming applications, financial applications, calendars, clocks, etc. In some examples, software components stored in memory 1280 include one or more communication interface modules 1283 as defined above. In some examples, software components stored in memory 1280 include one or more graphics modules 1284 for rendering, encoding, and/or decoding audio and/or visual data and one or more data management modules 1285 for collecting, organizing, and/or providing access to data 1287 stored in memory 1280. In some examples, one or more of applications 1282 and/or one or more modules can work in conjunction with one another to perform various tasks at the watch body 1120.

In some examples, software components stored in memory 1280 can include one or more operating systems 1281 (e.g., a Linux-based operating system, an Android operating system, etc.). Memory 1280 can also include data 1287. Data 1287 can include profile data 1288A, sensor data 1289A, media content data 1290, and application data 1291.

It should be appreciated that watch body computing system 1260 is an example of a computing system within watch body 1120, and that watch body 1120 can have more or fewer components than shown in watch body computing system 1260, can combine two or more components, and/or can have a different configuration and/or arrangement of the components. The various components shown in watch body computing system 1260 are implemented in hardware, software, firmware, or a combination thereof, including one or more signal processing and/or application-specific integrated circuits.

Turning to the wearable band computing system 1230, one or more components that can be included in wearable band 1110 are shown. Wearable band computing system 1230 can include more or fewer components than shown in watch body computing system 1260, can combine two or more components, and/or can have a different configuration and/or arrangement of some or all of the components. In some examples, all, or a substantial portion of the components of wearable band computing system 1230 are included in a single integrated circuit. Alternatively, In some examples, components of wearable band computing system 1230 are included in a plurality of integrated circuits that are communicatively coupled. As described above, In some examples, wearable band computing system 1230 is configured to couple (e.g., via a wired or wireless connection) with watch body computing system 1260, which allows the computing systems to share components, distribute tasks, and/or perform other operations described herein (individually or as a single device).

Wearable band computing system 1230, similar to watch body computing system 1260, can include one or more processors 1249, one or more controllers 1247 (including one or more haptics controllers 1248), a peripherals interface 1231 that can includes one or more sensors 1213 and other peripheral devices, a power source (e.g., a power system 1256), and memory (e.g., a memory 1250) that includes an operating system (e.g., an operating system 1251), data (e.g., data 1254 including profile data 1288B, sensor data 1289B, etc.), and one or more modules (e.g., a communications interface module 1252, a data management module 1253, etc.).

One or more of sensors 1213 can be analogous to sensors 1221 of watch body computing system 1260. For example, sensors 1213 can include one or more coupling sensors 1232, one or more SpO2 sensors 1234, one or more EMG sensors 1235, one or more capacitive sensors 1236, one or more heart rate sensors 1237, and one or more IMU sensors 1238.

Peripherals interface 1231 can also include other components analogous to those included in peripherals interface 1261 of watch body computing system 1260, including an NFC component 1239, a GPS component 1240, an LTE component 1241, a Wi-Fi and/or Bluetooth communication component 1242, and/or one or more haptic devices 1246 as described above in reference to peripherals interface 1261. In some examples, peripherals interface 1231 includes one or more buttons 1243, a display 1233, a speaker 1244, a microphone 1245, and a camera 1255. In some examples, peripherals interface 1231 includes one or more indicators, such as an LED.

It should be appreciated that wearable band computing system 1230 is an example of a computing system within wearable band 1110, and that wearable band 1110 can have more or fewer components than shown in wearable band computing system 1230, combine two or more components, and/or have a different configuration and/or arrangement of the components. The various components shown in wearable band computing system 1230 can be implemented in one or more of a combination of hardware, software, or firmware, including one or more signal processing and/or application-specific integrated circuits.

Wrist-wearable device 1100 with respect to FIG. 11 is an example of wearable band 1110 and watch body 1120 coupled together, so wrist-wearable device 1100 will be understood to include the components shown and described for wearable band computing system 1230 and watch body computing system 1260. In some examples, wrist-wearable device 1100 has a split architecture (e.g., a split mechanical architecture, a split electrical architecture, etc.) between watch body 1120 and wearable band 1110. In other words, all of the components shown in wearable band computing system 1230 and watch body computing system 1260 can be housed or otherwise disposed in a combined wrist-wearable device 1100 or within individual components of watch body 1120, wearable band 1110, and/or portions thereof (e.g., a coupling mechanism 1116 of wearable band 1110).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some examples, wrist-wearable device 1100 can be used in conjunction with a head-wearable device (e.g., AR glasses 1300 and VR system 1410) and/or an HIPD, and wrist-wearable device 1100 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR glasses 1300 and VR headset 1410.

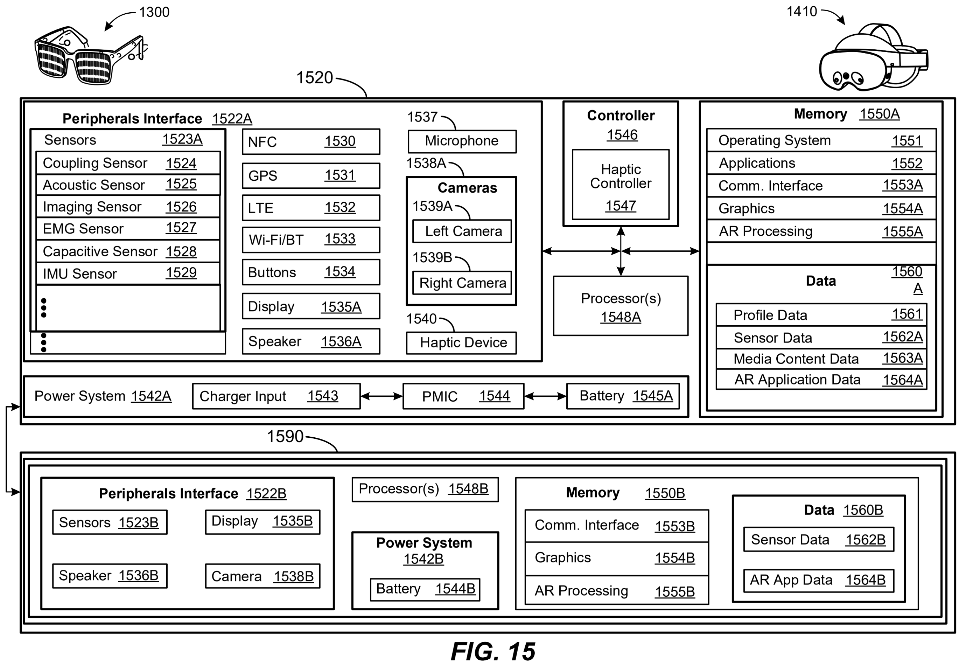

FIGS. 13 to 15 show example artificial-reality systems, which can be used as or in connection with wrist-wearable device 1100. In some examples, AR system 1300 includes an eyewear device 1302, as shown in FIG. 13. In some examples, VR system 1410 includes a head-mounted display (HMD) 1412, as shown in FIGS. 14A and 14B. In some examples, AR system 1300 and VR system 1410 can include one or more analogous components (e.g., components for presenting interactive artificial-reality environments, such as processors, memory, and/or presentation devices, including one or more displays and/or one or more waveguides), some of which are described in more detail with respect to FIG. 15. As described herein, a head-wearable device can include components of eyewear device 1302 and/or head-mounted display 1412. Some examples of head-wearable devices do not include any displays, including any of the displays described with respect to AR system 1300 and/or VR system 1410. While the example artificial-reality systems are respectively described herein as AR system 1300 and VR system 1410, either or both of the example AR systems described herein can be configured to present fully-immersive virtual-reality scenes presented in substantially all of a user's field of view or subtler augmented-reality scenes that are presented within a portion, less than all, of the user's field of view.

FIG. 13 show an example visual depiction of AR system 1300, including an eyewear device 1302 (which may also be described herein as augmented-reality glasses, and/or smart glasses). AR system 1300 can include additional electronic components that are not shown in FIG. 13, such as a wearable accessory device and/or an intermediary processing device, in electronic communication or otherwise configured to be used in conjunction with the eyewear device 1302. In some examples, the wearable accessory device and/or the intermediary processing device may be configured to couple with eyewear device 1302 via a coupling mechanism in electronic communication with a coupling sensor 1524 (FIG. 15), where coupling sensor 1524 can detect when an electronic device becomes physically or electronically coupled with eyewear device 1302. In some examples, eyewear device 1302 can be configured to couple to a housing 1590 (FIG. 15), which may include one or more additional coupling mechanisms configured to couple with additional accessory devices. The components shown in FIG. 13 can be implemented in hardware, software, firmware, or a combination thereof, including one or more signal-processing components and/or application-specific integrated circuits (ASICs).

Eyewear device 1302 includes mechanical glasses components, including a frame 1304 configured to hold one or more lenses (e.g., one or both lenses 1306-1 and 1306-2). One of ordinary skill in the art will appreciate that eyewear device 1302 can include additional mechanical components, such as hinges configured to allow portions of frame 1304 of eyewear device 1302 to be folded and unfolded, a bridge configured to span the gap between lenses 1306-1 and 1306-2 and rest on the user's nose, nose pads configured to rest on the bridge of the nose and provide support for eyewear device 1302, earpieces configured to rest on the user's ears and provide additional support for eyewear device 1302, temple arms configured to extend from the hinges to the earpieces of eyewear device 1302, and the like. One of ordinary skill in the art will further appreciate that some examples of AR system 1300 can include none of the mechanical components described herein. For example, smart contact lenses configured to present artificial reality to users may not include any components of eyewear device 1302.

Eyewear device 1302 includes electronic components, many of which will be described in more detail below with respect to FIG. 15. Some example electronic components are illustrated in FIG. 13, including acoustic sensors 1325-1, 1325-2, 1325-3, 1325-4, 1325-5, and 1325-6, which can be distributed along a substantial portion of the frame 1304 of eyewear device 1302. Eyewear device 1302 also includes a left camera 1339A and a right camera 1339B, which are located on different sides of the frame 1304. Eyewear device 1302 also includes a processor 1348 (or any other suitable type or form of integrated circuit) that is embedded into a portion of the frame 1304.

FIGS. 14A and 14B show a VR system 1410 that includes a head-mounted display (HMD) 1412 (e.g., also referred to herein as an artificial-reality headset, a head-wearable device, a VR headset, etc.). As noted, some artificial-reality systems (e.g., AR system 1300) may, instead of blending an artificial reality with actual reality, substantially replace one or more of a user's visual and/or other sensory perceptions of the real world with a virtual experience (e.g., AR systems 900 and 1000).

HMD 1412 includes a front body 1414 and a frame 1416 (e.g., a strap or band) shaped to fit around a user's head. In some examples, front body 1414 and/or frame 1416 include one or more electronic elements for facilitating presentation of and/or interactions with an AR and/or VR system (e.g., displays, IMUs, tracking emitter or detectors). In some examples, HMD 1412 includes output audio transducers (e.g., an audio transducer 1418), as shown in FIG. 14B. In some examples, one or more components, such as the output audio transducer(s) 1418 and frame 1416, can be configured to attach and detach (e.g., are detachably attachable) to HMD 1412 (e.g., a portion or all of frame 1416, and/or audio transducer 1418), as shown in FIG. 14B. In some examples, coupling a detachable component to HMD 1412 causes the detachable component to come into electronic communication with HMD 1412.

FIGS. 14A and 14B also show that VR system 1410 includes one or more cameras, such as left camera 1439A and right camera 1439B, which can be analogous to left and right cameras 1339A and 1339B on frame 1304 of eyewear device 1302. In some examples, VR system 1410 includes one or more additional cameras (e.g., cameras 1439C and 1439D), which can be configured to augment image data obtained by left and right cameras 1439A and 1439B by providing more information. For example, camera 1439C can be used to supply color information that is not discerned by cameras 1439A and 1439B. In some examples, one or more of cameras 1439A to 1439D can include an optional IR cut filter configured to remove IR light from being received at the respective camera sensors.

FIG. 15 illustrates a computing system 1520 and an optional housing 1590, each of which show components that can be included in AR system 1300 and/or VR system 1410. In some examples, more or fewer components can be included in optional housing 1590 depending on practical restraints of the respective AR system being described.

In some examples, computing system 1520 can include one or more peripherals interfaces 1522A and/or optional housing 1590 can include one or more peripherals interfaces 1522B. Each of computing system 1520 and optional housing 1590 can also include one or more power systems 1542A and 1542B, one or more controllers 1546 (including one or more haptic controllers 1547), one or more processors 1548A and 1548B (as defined above, including any of the examples provided), and memory 1550A and 1550B, which can all be in electronic communication with each other. For example, the one or more processors 1548A and 1548B can be configured to execute instructions stored in memory 1550A and 1550B, which can cause a controller of one or more of controllers 1546 to cause operations to be performed at one or more peripheral devices connected to peripherals interface 1522A and/or 1522B. In some examples, each operation described can be powered by electrical power provided by power system 1542A and/or 1542B.

In some examples, peripherals interface 1522A can include one or more devices configured to be part of computing system 1520, some of which have been defined above and/or described with respect to the wrist-wearable devices shown in FIGS. 11 and 12. For example, peripherals interface 1522A can include one or more sensors 1523A. Some example sensors 1523A include one or more coupling sensors 1524, one or more acoustic sensors 1525, one or more imaging sensors 1526, one or more EMG sensors 1527, one or more capacitive sensors 1528, one or more IMU sensors 1529, and/or any other types of sensors explained above or described with respect to any other examples discussed herein.

In some examples, peripherals interfaces 1522A and 1522B can include one or more additional peripheral devices, including one or more NFC devices 1530, one or more GPS devices 1531, one or more LTE devices 1532, one or more Wi-Fi and/or Bluetooth devices 1533, one or more buttons 1534 (e.g., including buttons that are slidable or otherwise adjustable), one or more displays 1535A and 1535B, one or more speakers 1536A and 1536B, one or more microphones 1537, one or more cameras 1538A and 1538B (e.g., including the left camera 1539A and/or a right camera 1539B), one or more haptic devices 1540, and/or any other types of peripheral devices defined above or described with respect to any other examples discussed herein.

AR systems can include a variety of types of visual feedback mechanisms (e.g., presentation devices). For example, display devices in AR system 1300 and/or VR system 1410 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some examples of AR systems also include optical subsystems having one or more lenses (e.g., conventional concave or convex lenses, Fresnel lenses, or adjustable liquid lenses) through which a user can view a display screen.

For example, respective displays 1535A and 1535B can be coupled to each of the lenses 1306-1 and 1306-2 of AR system 1300. Displays 1535A and 1535B may be coupled to each of lenses 1306-1 and 1306-2, which can act together or independently to present an image or series of images to a user. In some examples, AR system 1300 includes a single display 1535A or 1535B (e.g., a near-eye display) or more than two displays 1535A and 1535B. In some examples, a first set of one or more displays 1535A and 1535B can be used to present an augmented-reality environment, and a second set of one or more display devices 1535A and 1535B can be used to present a virtual-reality environment. In some examples, one or more waveguides are used in conjunction with presenting artificial-reality content to the user of AR system 1300 (e.g., as a means of delivering light from one or more displays 1535A and 1535B to the user's eyes). In some examples, one or more waveguides are fully or partially integrated into the eyewear device 1302. Additionally, or alternatively to display screens, some artificial-reality systems include one or more projection systems. For example, display devices in AR system 1300 and/or VR system 1410 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some examples, one or more waveguides are provided additionally or alternatively to the one or more display(s) 1535A and 1535B.

Computing system 1520 and/or optional housing 1590 of AR system 1300 or VR system 1410 can include some or all of the components of a power system 1542A and 1542B. Power systems 1542A and 1542B can include one or more charger inputs 1543, one or more PMICs 1544, and/or one or more batteries 1545A and 1544B.

Memory 1550A and 1550B may include instructions and data, some or all of which may be stored as non-transitory computer-readable storage media within the memories 1550A and 1550B. For example, memory 1550A and 1550B can include one or more operating systems 1551, one or more applications 1552, one or more communication interface applications 1553A and 1553B, one or more graphics applications 1554A and 1554B, one or more AR processing applications 1555A and 1555B, and/or any other types of data defined above or described with respect to any other examples discussed herein.

Memory 1550A and 1550B also include data 1560A and 1560B, which can be used in conjunction with one or more of the applications discussed above. Data 1560A and 1560B can include profile data 1561, sensor data 1562A and 1562B, media content data 1563A, AR application data 1564A and 1564B, and/or any other types of data defined above or described with respect to any other examples discussed herein.

In some examples, controller 1546 of eyewear device 1302 may process information generated by sensors 1523A and/or 1523B on eyewear device 1302 and/or another electronic device within AR system 1300. For example, controller 1546 can process information from acoustic sensors 1325-1 and 1325-2. For each detected sound, controller 1546 can perform a direction of arrival (DOA) estimation to estimate a direction from which the detected sound arrived at eyewear device 1302 of R system 1300. As one or more of acoustic sensors 1525 (e.g., the acoustic sensors 1325-1, 1325-2) detects sounds, controller 1546 can populate an audio data set with the information (e.g., represented in FIG. 15 as sensor data 1562A and 1562B).

In some examples, a physical electronic connector can convey information between eyewear device 1302 and another electronic device and/or between one or more processors 1348, 1548A, 1548B of AR system 1300 or VR system 1410 and controller 1546. The information can be in the form of optical data, electrical data, wireless data, or any other transmittable data form. Moving the processing of information generated by eyewear device 1302 to an intermediary processing device can reduce weight and heat in the eyewear device, making it more comfortable and safer for a user. In some examples, an optional wearable accessory device (e.g., an electronic neckband) is coupled to eyewear device 1302 via one or more connectors. The connectors can be wired or wireless connectors and can include electrical and/or non-electrical (e.g., structural) components. In some examples, eyewear device 1302 and the wearable accessory device can operate independently without any wired or wireless connection between them.

In some situations, pairing external devices, such as an intermediary processing device (e.g., HIPD 706, 806, 906) with eyewear device 1302 (e.g., as part of AR system 1300) enables eyewear device 1302 to achieve a similar form factor of a pair of glasses while still providing sufficient battery and computation power for expanded capabilities. Some, or all, of the battery power, computational resources, and/or additional features of AR system 1300 can be provided by a paired device or shared between a paired device and eyewear device 1302, thus reducing the weight, heat profile, and form factor of eyewear device 1302 overall while allowing eyewear device 1302 to retain its desired functionality. For example, the wearable accessory device can allow components that would otherwise be included on eyewear device 1302 to be included in the wearable accessory device and/or intermediary processing device, thereby shifting a weight load from the user's head and neck to one or more other portions of the user's body. In some examples, the intermediary processing device has a larger surface area over which to diffuse and disperse heat to the ambient environment. Thus, the intermediary processing device can allow for greater battery and computation capacity than might otherwise have been possible on eyewear device 1302 standing alone. Because weight carried in the wearable accessory device can be less invasive to a user than weight carried in the eyewear device 1302, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1300 and/or VR system 1410 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some examples, the methods described herein are used to map the real world, to provide a user with context about real-world surroundings, and/or to generate digital twins (e.g., interactable virtual objects), among a variety of other functions. For example, FIGS. 14A and 14B show VR system 1410 having cameras 1439A to 1439D, which can be used to provide depth information for creating a voxel field and a two-dimensional mesh to provide object information to the user to avoid collisions.

In some examples, AR system 1300 and/or VR system 1410 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some examples of an artificial reality system, such as AR system 1300 and/or VR system 1410, ambient light (e.g., a live feed of the surrounding environment that a user would normally see) can be passed through a display element of a respective head-wearable device presenting aspects of the AR system. In some examples, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the examples disclosed herein. This exemplary description is not intended to be exhaustive or to be limited to any precise form disclosed. Many modifications and variations are possible without departing from the scope of the present disclosure. The examples disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A mixed-reality display comprising:
an optical system dimensioned to project a mixed-reality image to a user such that an angle of projection determines a region hidden from a peripheral view of the user;
at least one hardware component electronically coupled to the optical system and dimensioned to fit within the region such that the at least one hardware component is hidden from the user; and
a frame coupled to hold the optical system and the at least one hardware component, wherein a rim of the frame is dimensioned to fit within the region.

2. The mixed-reality display of claim 1, wherein the optical system projects the mixed-reality image to the user by magnifying the mixed-reality image, wherein the angle of projection increases with the magnification.

3. The mixed-reality display of claim 1 or 2, wherein the optical system comprises:
a digital passthrough display configured to display the mixed-reality image as a mixture of a real-world image and at least one virtual element; and
a projector disposed at a proximal side of the digital passthrough display to project the mixed-reality image to the user using pancake optics.

4. The mixed-reality display of claim 3, wherein the at least one hardware component comprises at least one of:
a camera that captures the real-world image and transmits the real-world image to an image processing component; or
the image processing component electronically coupled to the camera and the optical system to convert the real-world image into the mixed-reality image.

5. The mixed-reality display of claim 4, wherein the image processing component converts the real-world image by:
adjusting the real-world image to blend with the peripheral view of the user;
combining the real-world image with the at least one virtual element; and
transmitting the mixed-reality image to the optical system.

6. The mixed-reality display of any preceding claim, wherein the rim of the frame is angled to minimize a visible bezel of the frame.

7. A mixed-reality system comprising:
the mixed-reality display of any preceding claim; and
a dimmable window coupled to the frame such that the dimmable window extends beyond the optical system to cover at least a portion of the peripheral view of the user.

8. The mixed-reality system of claim 7, wherein the dimmable window comprises an electrochromic glass that changes a tint of the dimmable window in response to an electrical signal from the frame.

9. The mixed-reality system of claim 8, wherein the tint of the dimmable window comprises at least one of:
a clear passthrough tint;
a partial tint;
a gradient tint; or
an opaque tint.

10. A method of manufacturing a mixed-reality display comprising:
dimensioning an optical system to project a mixed-reality image to a user such that an angle of projection determines a region hidden from a peripheral view of the user;
electronically coupling at least one hardware component to the optical system and dimensioning the at least one hardware component to fit within the region such that the at least one hardware component is hidden from the user; and
coupling a frame to hold the optical system and the at least one hardware component, wherein a rim of the frame is dimensioned to fit within the region.

11. The method of manufacturing of claim 10, wherein the optical system is dimensioned to project the mixed-reality image to the user by magnifying the mixed-reality image, wherein the angle of projection increases with the magnification.

12. The method of manufacturing of claim 10 or 11, wherein the optical system comprises:
a digital passthrough display configured to display the mixed-reality image as a mixture of a real-world image and at least one virtual element; and
a projector disposed at a proximal side of the digital passthrough display to project the mixed-reality image to the user using pancake optics.

13. The method of manufacturing of claim 12, wherein the at least one hardware component comprises at least one of:
a camera that captures the real-world image and transmits the real-world image to an image processing component; or
the image processing component electronically coupled to the camera and the optical system to convert the real-world image into the mixed-reality image.

14. The method of manufacturing of claim 13, wherein the image processing component is configured to convert the real-world image by:
adjusting the real-world image to blend with the peripheral view of the user;
combining the real-world image with the at least one virtual element; and
transmitting the mixed-reality image to the optical system.

15. The method of manufacturing of any of claims 10 to 14, further comprising angling the rim of the frame to minimize a visible bezel of the frame.
